# EUROPÄISCHE PATENTSCHRIFT

(11) **EP 4 038 306 B1**
(45) Veröffentlichungstag und Bekanntmachung des Hinweises auf die Patenterteilung: **07.01.2026**
(21) Anmeldenummer: 20789447.8
(22) Anmeldetag: 01.10.2020
(51) Int. Cl.: F16L 55/179

(54) **VORRICHTUNG ZUM SANIEREN EINER LEITUNG MIT EINER ARRETIERUNG DURCH EINEN DEHNKÖRPER**
DEVICE FOR RENOVATING A CONDUIT, IN WHICH AN EXPANSION ELEMENT LOCKS IN PLACE
DISPOSITIF DE RÉNOVATION D'UN CONDUIT, DANS LEQUEL UN ÉLÉMENT D'EXPANSION SE VERROUILLE EN PLACE

(30) Priorität: 01.10.2019 DE 102019006865
(43) Veröffentlichungstag der Anmeldung: 10.08.2022
(73) Patentinhaber: Pipetronics GmbH & Co. KG, 76865 Rohrbach (DE)
(72) Erfinder: NOLL, Christian, 67117 Limburgerhof (DE)
(74) Vertreter: Dr. Langfinger & Partner
(86) Internationale Anmeldenummer: PCT/DE2020/100846
(87) Internationale Veröffentlichungsnummer: WO 2021/063450

(56) Entgegenhaltungen:
- EP-A1- 0 674 132
- DE-A1- 10 156 069
- DE-U1- 29 509 319
- US-A- 5 040 922

## Beschreibung

Die vorliegende Erfindung betrifft Verfahren zum Sanieren von schadhaften Leitungswandungen im Bereich des Anschlusses einer Nebenleitung an eine Hauptleitung, wobei ein Abdeckelement und eine Schalung gleichzeitig gesetzt werden.

Es sind Vorrichtungen und Verfahren für eine solche Sanierung im Stand der Technik bekannt, bei denen ein selbstfahrender oder mit Seilen im Kanal verfahrbarer Kanalsanierungsroboter eine Tragvorrichtung für verschiedene Sanierungswerkzeuge umfasst. Diese Werkzeuge, insbesondere eine Spachteleinrichtung, lassen sich nach Positionierung des Roboters im Schadstellenbereich von außerhalb des Kanals aus steuern.

Für die Reparatur von Schadstellen im Bereich des Anschlusses einer Nebenleitung an eine Hauptleitung sind zudem Vorrichtungen im Stand der Technik beschrieben, bei denen der im Hauptkanal anordnenbare Kanalsanierungsroboter eine Tragvorrichtung für eine im Bereich des Nebenkanalanschlusses an die Wandung des Hauptleitung anlegbare Abdeckung bildet.

Die Abdeckung trägt ihrseeits einen in die Nebenleitung einbringbaren, aufweitbaren Dehnkörper, auch Blase genannt. Im aufgeweiteten Zustand liegt dieser Dehnkörper gegen die Wandung der Nebenleitung an und bildet dann zusammen mit der Abdeckung eine Schalung aus, die eine in diese Schalung eingebrachte viskose Dichtmasse vor einem Aushärten derselben stützt. Nach dem Aushärten wird der Dehnkörper kontrahiert und die Abeckung entfernt und die Dichtmasse bildet die wiederhergestellten, vorher schadhaften Kanalwandungsbereiche. Ein solche Abdeckung gemäß dem Stand der Technik, auch als Schalungsmanschette bezeichnet, ist in einer Ausführungsform grundsätzlich aus WO 1995027167A1 vorbekannt.

Grundsätzlich besteht die Möglichkeit die von den Vorrichtungen der beschriebenen Art verwendete viskose aushärtbare Dichtmasse vom Kanaläußeren aus über Schläuche oder andere bewegliche Leitungen dem Kanalsanierungsgerät zuzuführen.

Diese Lösung ist aber nicht nur aufwendig, sondern auch in vielerlei Hinsicht nachteilig. Das Nachziehen von Leitungen schränkt die Manövrierfähigkeit der Vorrichtung im Kanal erheblich ein, insbesondere da ofmals mehrere schadhafte und zu sanierende Stellen in einem Kanal auftreten und die Schadstellen auch mehr als 100 Meter vom Einbringort des Kanalsierungsroboters entfernt liegen können. Daher müssen die Zuführleitungen für die Spachtel- oder Dichtmasse sehr lang sein.

Die zähe Sanierungsmasse durch derart lange Leitungen zu drücken bereitet erhebliche Probleme. Zähe, insbesondere tixotrope Medien bewirken einen geschwindigkeitsabhängigen Druckverlust bei jeder Bewegung in der Leitung. Die Zahlenwerte für Viskosität und Schubspannung in der Sanierungsmasse variieren stark mit der Leitungsgeometrie, der Temperatur und dem genauen Zustand der oft körnigen Anteile enthaltenden Sanierungsmasse.

Gerade bei den mit Schalungen arbeitenden Vorrichtungen ist die Einhaltung bestimmter Druckbereiche beim Verpressen der Sanierungsmasse besonders wichtig. Der Druck muss grundsätzlich mindestens so hoch sein, dass gewährleistet ist, dass die Sanierungsmasse alle schadhaften Kanalwandungsbereiche vollständig ausfüllt. Der Druck darf aber nicht so hoch sein, dass er die schadhaften und brüchigen Kanalwandbereiche zu hoch belastet.

Da der Bediener meist dutzende von Metern entfernt sitzt, ist dieser in der Regel damit überfordert, den Förderdruck für die Sanierungsmasse so einzustellen, dass diese Masse mit dem erforderlichen Druck im Bereich der Spachteleinrichtung bzw. der mit einer Abdeckung und einem Dehnkörper gebildeten Schalung ankommt.

Aus dem Stand der Technik sind daher Lösungen bekannt, um auf eine Verwendung von Leitungen zum Zuführen der Sanierungsmassen zu verzichten.

Aus DE 36 18 963 ist eine mit Abdeckung und Dehnkörper ausgestattete Kanalsanierungsvorrichtung bekannt, bei der die Sanierungsmasse um den zunächst schlaffen Dehnkörper herum angeordnet und dann zusammen mit diesem in den Nebenkanal eingefahren wird. Beim Aufweiten des Dehnkörpers drückt dieser die Sanierungsmasse radial gegen die schadhafte Kanalwand.

Dies bietet den Nachteil, dass nur Sanierungsmassen mit einer hohen Topfzeit verwendet werden können. Unter einer Topfzeit versteht man die Verarbeitbarkeitsdauer von reaktiven Materialien Es ist also die Zeit zwischen dem Anmischen einer mehrkomponentigen Substanz und dem Ende ihrer Verarbeitbarkeit, also die Zeitspanne, in der sich die Substanz noch aus dem Topf nehmen und verarbeiten lässt.

Da als Sanierungsmasse üblicherweise Zweikomponentenkleber verwendet werden, muss somit bei einer Lösung gemäß DE 36 18 963 die Zeit bis zum Aushärten mit vielen Sicherheiten festgelegt werden, damit sichergestellt ist, dass die Schalung vor Ende der Topfzeit gesetzt ist.

Daher ist im Stand der Technik alternativ bekannt geworden, die Sanierungsmasse in Kartuschen, Zylinder und mittels Pumpen entleerbaren Aufbewahrungsbehältern direkt auf dem Sanierungsroboter anzuordnen.

Problematisch hierbei ist jedoch, dass dies die notwendige Topfzeit verlängert. Beim Einsatz von Aufbewahrungsbehältern beginnt die Aushärtung der Sanierungsmasse spätestens mit dem Befüllen der derselben und somit bereits vor dem Einbringen des Sanierungsroboters in die zu sanierende Leitung.

Dabei ist zu beachten, dass das Anbringen der Schalung mehrere Arbeitsschritte umfasst. Zunächst wird das Abdeckelement in der Hauptleitung expandiert, dann der Dehnkörper durch eine Aussparung in die Nebenleitung eingeführt und ebenfalls expandiert, indem ein kleines nadelförmiges Verbindungselement in das Ventil des Dehnkörpers eingeführt werden muss. Anschließend muss ein Verschluss in der Abdeckung geöffnet werden, und dort der Auslass einer Leitung zum Transport der Sanierungsmasse in den Zwischenraum zwischen der durch die Abdeckung und den Dehnkörper gebildeten Schalung und die Bestandswände gepresst werden.

Jeder dieser Arbeitsschritte ist potentiell fehleranfällig und muss ggf. mehrfach wiederholt werden, so dass die Topfzeit mit hohen Sicherheiten für solche Bedienfehler ausgelegt werden muss. Dementsprechend lang ist die Aushärtezeit der Sanierungsmasse bis die Schalung wieder entfernt werden kann.

Es ist jedoch wünschenswert, den Zeitraum, in dem die Schalung in der Leitung verbleiben muss, zu minimieren. Dies reduziert Arbeitskosten sowie die Kosten für das Bereithalten des Kanalsanierungsroboters.

Besonders aufwendig gestaltet sich dabei das Setzen des Dehnkörpers. Um den Dehnkörper zu expandieren muss dieser mit Druckluft beaufschlagt werden. Das Ventil des Dehnkörpers ist jedoch klein und muss präzise mittels eines Auslegers angesteuert werden, in dem ein meist nadelförmiges Verbindungselement in dieses eingeführt wird. Dies Verbinden ist für einen Benutzer, der den Ausleger mittels Kamerabildern steuert, schwierig und benötigt oftmals mehrere Versuche. Im ungünstigsten Fall wird dabei sogar der Dehnkörper zerstört. Gerade auch durch dieses zeitaufwendige Expandieren des Dehnkörpers muss eine lange Topfzeit der Sanierungsmasse gewählt werden. Während die Fahrtzeit der Vorrichtung bis zu der zu sanierenden Stelle relativ genau bestimmt werden kann, ist die Anzahl der Versuche, bis der Dehnkörper expandiert ist, schwer vorherzubestimmen und entsprechende Sicherheitszeiträume müssen eingeplant werden.

DE 10156069 A1, EP 0674132 A1, und DE 29509319 U1 offenbaren weitere Sanierungsvorrichtungen für beschädigte Rohrleitungen.

Daher lag die Aufgabe der vorliegenden Erfindung darin, die Nachteile des Standes der Technik zu überwinden und insbesondere eine Vorrichtung zu liefern, die eine schnellere und zuverlässigere Sanierung von Leitungen ermöglicht, wobei insbesondere das Anbringen von Schalung und Dehnkörper vereinfacht werden soll.

Diese Aufgabe wird gelöst durch eine Vorrichtung gemäß Anspruch 1 zum Sanieren von schadhaften Leitungswandungen im Bereich des Anschlusses einer Nebenleitung an eine Hauptleitung, umfassend ein Abdeckelement und ein aufweitbarer Dehnkörper, und wobei der aufweitbare Dehnkörper im nicht aufgeweiteten Zustand mindestens abschnittsweise in einer oder durch eine erste Aussparung in dem Abdeckelement in der Nebenleitung positioniert ist und im aufgeweiteten Zustand an der Wandung der Nebenleitung anliegt, so dass das Abdeckelement und der Dehnkörper zusammen eine Schalung ausbilden, dadurch gekennzeichnet, dass der Dehnkörper im aufgeweiteten Zustand fest an der Wandung der Nebenleitung anliegt, so dass der Dehnkörper sich selbt und die Schalung arretiert.

Unter einem Abdeckelement soll ein Element verstanden werden, welches die Innenwandung der Hauptleitung derart abdecken kann, dass zwischen dem Abdeckelement und dem dahinterliegenden Raum ein definierter Hohlraum gebildet ist, der dicht gegenüber der Sanierungsmasse ist und ein Eindringen derselben in die Hauptleitung verhindert.

Oftmals hat es sich als vorteilhaft erwiesen, dass das Abdeckelement in Form eines Hohlzylinders bereitgestellt wird, dessen Innendurchmesser veränderbar ist. So wird der Hohlzylinder mit verkleinertem Innendurchmesser in einem Transportzustand an die schadhafte Stelle mittels des Trägerelements verfahren und dann dort expandiert, so dass dieser an den Innenwandungen der Hauptleitung fest anliegt.

Es kann aber gleichsam vorteilhaft sein, dass das Abdeckelement ein Form einer, insbesondere flexiblen, kreisringsegementförmigen Fläche ausgebildet ist, die an die innere Wandung der zu sanierenden Leitung angepresst werden kann.

Unter einem Dehnkörper soll ein größenveränderbares Element verstanden werden, welches meist auf Kunststoff oder Gummi basiert und prinzipiell einem Ballon ähnelt. Des weiteren Umfasst der Dehnkörper insbesondere ein Ventil, um ein expandieren mit Druckluft zu ermöglichen sowie bei einem Öffnen des Ventils ein anschließendes Kontrahieren.

Der Dehnköper wird dabei in einer ersten Aussparung in dem Abdeckelement angeordnet und expandiert in die Nebenleitung. Gemeinsam bilden das Abdeckelement und der Dehnkörper eine Schalung aus, die, zumindest ungefähr, dem Innendurchmesser der Leitungen entspricht.

Der Erfindung liegt dabei die überraschende Erkenntnis zugrunde, dass die Nachteile des Stands der Technik dadurch überwunden werden können, indem der Dehnkörper, auch als Blase bezeichnet, sich selbst und die weitere Technik arretiert.

Dabei ist der Dehnkörper mittels eines Befestigungselement mit dem Abdeckelement verbunden, so dass ein Expandieren und festes Anliegen des Dehnkörpers an dem Zulauf den Dehnkörper und das Abdeckelement auf einmal in der Leitung arretiert.

Dies löst zwei Probleme. Zum einen ist durch den Dehnkörper die Vorrichtung optimal zentriert angeordnet, zum anderen muss nicht aufwendig ein Druckluftanschluss zu dem Dehnkörper nachträglich hergestellt werden. Dies ist wie oben ausgeführt sehr aufwendig.

Die erfindungsgemäße Vorrichtung vereinfacht somit signifikant den Vorrang des Setzens des Dehnkörpers und der Schalung gegenüber den aus dem Stand der Technik bekannten Vorrichtungen und Verfahren.

Es wird vorgesehen, dass ein Befestigungselement umfasst ist, das an dem der Nebenleitung entgegengesetzt angeordneten Ende des Dehnkörpers oder benachbart zu diesem Ende angeordnet ist, wobei das Befestigungselement mit dem Dehnkörper und mit dem Abdeckelement verbunden ist.

In diesem Zusammenhang kann es vorteilhaft sein, dass das Abdeckelement eine zweite Aussparung aufweist, durch die mittels eines Transportmittels von einer Aufbewahrungseinrichtung eine viskose, aushärtbare Sanierungsmasse in den Raum zwischen der Schalung und der zu der Schalung benachbarten Wandungen der Haupt- und Nebenleitung einbringbar ist.

Auch kann es vorteilhaft sein, dass der Dehnkörper, das Befestigungselement und das Abdeckelement auf einem fahrbaren Trägerelement angeordnet sind.

Erfindungsgemäß hat es sich als besonders vorteilhaft erwiesen, dass ein weiterer Dehnkörper zwischen dem Befestigungselement und dem Abdeckelement angeordnet ist, wobei ein Expandieren des weiteren Dehnkörpers das Abdeckelement an die Wandung der Leitung presst.

Dabei kann es vorgesehen sein, dass der weitere Dehnkörper zweigeteil ausgebildet ist und jeweils ein weiterer Dehnkörper an gegenüberliegenden vertikalen Enden des ersten Dehnkörpers angeordnet ist.

Auch kann es bevorzugt sein, dass eine Heizeinrichtung umfasst ist, die mit der Blase und/oder dem Abdeckelement in Wirkverbindung steht, wobei insbesondere die Heizeinrichtung in Form eines Heizschlauchs, einer Strahlungsquelle, insbesondere einer Infrarot-Heizvorrichtung und/oder einer Mikrowellenerzeugungseinrichtung, und/oder einer Elektroheizung ausgebildet ist.

Gemäß einer Ausführungsform kann es bevorzugt sein, dass die Sanierungsmasse aus der Aufbewahrungseinrichtung durch eine Druckbeaufschlagung im Inneren der Aufbewahrungseinrichtung und/oder durch eine Pumpeinrichtung über das Transportmittel in den Raum hinter der Schalung einbringbar ist.

Schließlich ist es gemäß einer Ausführungsform vorteilhaft, dass die viskose, aushärtbare Sanierungsmasse ein Expoxydharz ist.

Wie bereits ausgeführt ist es im Stand der Technik bekannt, dass die Aufbewahrungseinrichtung für die Sanierungsmasse außerhalb des Leitungssystems angeordnet ist. Die diesbezüglichen Nachteile wurden beschrieben. Es hat sich jedoch gezeigt, dass eine direkte Integration der Aufbewahrungsvorrichtung auf das Trägerelement eine besonders kompakte Bauform ermöglicht und insbesondere den Verzicht auf einen zweiten Wagen bzw. Roboter erlaubt.

Dabei kann es vorgesehen sein, dass die Sanierungsmasse aus der Aufbewahrungseinrichtung durch eine Druckbeaufschlagung im Inneren der Aufbewahrungseinrichtung und/oder durch eine Pumpeinrichtung über das Transportmittel in den Raum hinter der Schalung einbringbar ist.

Die Sanierungsmasse muss mit einem jeweils individuellen Minimaldruck in den durch die Schalung definierten Hohlraum eingepresst werden. Des weiteren darf der Druck jedoch nicht so hoch werden, dass die Schalung ihrer abdichtenden Funktion nicht mehr nachkommen kann. Um einen solchen definierten Druck einstellen zu können, haben sich Pumpeinrichtungen, wie z.B. peristaltische Pumpen oder Kolbenpumpen als besonders geeignet erwiesen. Alternativ kann es jedoch auch möglich sein, mittels einer Druckbeaufschlagung innerhalb der Aufbewahrungseinrichtung ein Fluss der Sanierungsmasse in den besagten Hohlraum zu ermöglichen.

Gemäß einer Ausführungsform der vorliegenden Erfindung kann es vorteilhaft sein, dass das Abdeckelement in einem Transportzustand einen geringeren Innendurchmesser aufweist als in einem Betriebszustand, und insbesondere in Form einer Schalungs-Manschette aufgebildet ist.

Die Ausbildung des Abdeckelement mit unterschiedlichen Innendurchmessern ist vorteilhaft und aus dem Stand der Technik bekannt. Insbesondere eine Ausbildung des Abdeckelements in Form einer Schalungsmanschette hat den Vorteil, dass sich das zylinderförmige Abdeckelement sehr gut in der Leitung transportieren lässt und im Betriebstzustand sehr sicher fixiert ist, da es sich innerhalb der Hauptleitung selbstständig ausrichtet und durch den Anpressdruck in der gewünschten Position arretieren lässt, ohne dass weitere Hilfsmittel zum Einsatz kommen müssen.

Des weiteren hat es sich gemäß einer Ausführungsform als vorteilhaft erwiesen, dass ein Drucklufterzeugungselement, insbesondere in Form eines Kompressor und/oder eines Druckluftbehälters, umfasst ist, um den Dehnkörper mittels Druckluft zu expandieren.

Dabei kann es des weiteren bevorzugt sein, dass das Verbindungselement ausgelegt und eingerichtet ist, um das Ventil des Dehnkörpers für ein Kontrahieren des Dehnkörpers zu betätigen.

Zum Expandieren und Kontrahieren des Dehnkörpers wird bevorzugt auf ein in den Dehnkörper integriertes Ventil zurückgegriffen. Das Ventil selbst ist dabei mittels des Verbindungselements entweder mit Druck beaufschlagbar oder Überdruck im Dehnkörper kann durch in Wirkverbindung bringen des Verbindungselements mit dem Ventil aus dem Dehnkörper abgelassen werden.

Um den Dehnkörper zu Expandieren wird erfindungsgemäß bevorzugt auf Druckluft zurückgegriffen. Die Druckluft wird dabei entweder vor Ort erzeugt oder in einem Druckluftbehälter mitgeführt. Um das Verbindungselement mit dem Ventil des Dehnkörpers zu verbinden hat es sich zudem als vorteihaft erwiesen, dass auf einen in mindestens einer Raumachse beweglichen Ausleger zurückgegriffen wird, an dessem losen Ende sich das Verbindungselement befindet. Dabei ist beoprzugt das Verbindungselement mit der Transportleitung für Druckluft verbunden, die wiederum mit dem Drucklufterzeugungselement verbunden ist.

Gemäß einer Ausführungsform der vorliegendne Erfindung ist die viskose, aushärtbare Sanierungsmasse ein Expoxydharz ist.

Zweikomponentenharze haben sich als besonders vorteilhafte Dichtmassen erwiesen.

Schließlich liefert die Erfindung eine Verwendung gemäß Anspruch 11 einer erfindungsgemäßen Vorrichtung für eine Sanierung von schadhaften Leitungswandungen im Bereich des Anschlusses einer Nebenleitung an eine Hauptleitung.

Auch liefert die Erfindung ein Verfahren gemäß Anspruch 8 zum Sanieren von schadhaften Leitungswandungen im Bereich des Anschlusses einer Nebenleitung an eine Hauptleitung, umfassend die folgenden Schritte, insbesondere in dieser Reihenfolge:
a) Bereitstellen einer Vorrichtung nach einem der vorangehnden Ansprüche;
b) Teilweises Anordnen des Dehnkörpers in dem Seitenzulauf;
c) Expandieren des Dehnkörpers zum Arretieren des Dehnkörpers und einem mit diesem verbundenen Abdeckelements

Des weiteren umfasst das Verfahren bevorzugt den folgenden Schritt Schritt:
d) Einbringen einer Sanierungsmasse zwischen das Abdeckelement, die Blase und die Wandung.

Schließlich kann das Verfahren bevorzugt auch den Schritt umfassen:
e) Expandieren eines weiteren Dehnkörpers zwischen dem Befestigungselement und dem Abdeckelement nach Schritt c) und vor Schritt d) zum Anpressen des Abdeckelements an die Wandung der zu sanierenden Leitung.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert wird, ohne dadurch die Erfindung zu beschränken.
Figur 1: eine schematische Seitenansicht einer erfindungsgemäßen Vorrichtung angeordent in einer Leitung im Schnitt; und
Figur 2: die Vorrichtung aus Figur 1 mit exandiertem weiteren Dehnkörper.

In den Figuren ist eine erfindungsgemäße Vorrichtung 1 ausschließlich teilweise dargestellt. Diese umfasst einen Dehkörper 3, der in einem Seitenzulauf 5 expandiert ist. Der Dehnkörper 3 ist dabei mit einem Befestigungselement 9 verbunden, welches in der Leitung angordent ist.

Ein Abdeckelement 7 ist dabei ebenfalls mit dem Befestigungselement 9 verbunden.

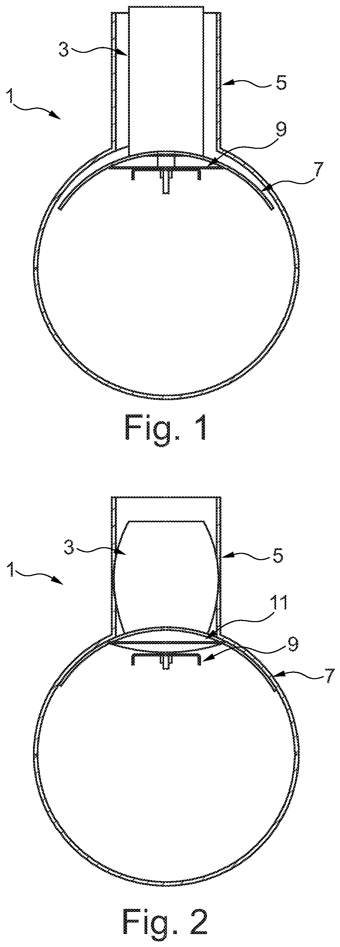

Ein weiterer Dehnkörper ist in Figur 2 dargestellt. Ist dieser expandiert, so drückt er das Abdeckelement 7 gegen die Wandung der Leitung.

Eine erfindungsgemäße Vorrichtung 1 ist somit einfach in einer Leitung anbringbar, da durch die Expansion des Dehnkörpers 3 die Vorrichtung zum einen ausgerichtet wird und zum anderen fest arretiert ist. Das Abdeckelement 7 kann dann mittels weiterer Dehnkörper an die Wandung angepresst werden, und nachfolgend wir die Sanierungsmasse zwischen das Abdeckelement 7 und den Dehnkörper 3 sowie die Wandung der Leitung und des Zulaufs gepresst und die Leitung wird saniert.

## Patentansprüche

1. Vorrichtung (1) zum Sanieren von schadhaften Leitungswandungen im Bereich des Anschlusses einer Nebenleitung an eine Hauptleitung, umfassend ein Abdeckelement (7) und ein aufweitbarer Dehnkörper (3), und wobei der aufweitbare Dehnkörper im nicht aufgeweiteten Zustand mindestens abschnittsweise in einer oder durch eine erste Aussparung in dem Abdeckelement in der Nebenleitung positioniert ist und im aufgeweiteten Zustand an der Wandung der Nebenleitung anliegt, so dass das Abdeckelement (7) und der Dehnkörper (3) zusammen eine Schalung ausbilden, wobei der Dehnkörper (3) im aufgeweiteten Zustand fest an der Wandung der Nebenleitung anliegt, so dass der Dehnkörper (3) sich selbst und die Schalung arretiert, und dass ein Befestigungselement (9) umfasst ist, das an dem der Nebenleitung entgegengesetzt angeordneten Ende des Dehnkörpers (3) oder benachbart zu diesem Ende angeordnet ist, wobei das Befestigungselement (9) mit dem Dehnkörper (3) und mit dem Abdeckelement (7) verbunden ist,
**dadurch gekennzeichnet, dass**
ein weiterer Dehnkörper zwischen dem Befestigungselement (9) und dem Abdeckelement (7) angeordnet ist, wobei ein Expandieren des weiteren Dehnkörpers (3) das Abdeckelement (7) an die Wandung der Leitung presst.

2. Vorrichtung nach Anspruch 1, **dadurch gekennzeichnet, dass** das Abdeckelement eine zweite Aussparung aufweist, durch die mittels eines Transportmittels von einer Aufbewahrungseinrichtung eine viskose, aushärtbare Sanierungsmasse in den Raum zwischen der Schalung und der zu der Schalung benachbarten Wandungen der Haupt- und Nebenleitung einbringbar ist.

3. Vorrichtung nach Anspruch 1 oder Anspruch 2, **dadurch gekennzeichnet, dass** der Dehnkörper, das Befestigungselement und das Abdeckelement auf einem fahrbaren Trägerelement angeordnet sind.

4. Vorrichtung nach einem der vorangehenden Ansprüche, **dadurch gekennzeichnet, dass**
der weitere Dehnkörper zweigeteilt ausgebildet ist und jeweils ein weiterer Dehnkörper an gegenüberliegenden vertikalen Enden des ersten Dehnkörpers angeordnet ist.

5. Vorrichtung nach einem der vorangehenden Ansprüche, **dadurch gekennzeichnet, dass**
eine Heizeinrichtung umfasst ist, die mit der Blase und/oder dem Abdeckelement in Wirkverbindung steht, wobei insbesondere die Heizeinrichtung in Form eines Heizschlauchs, einer Strahlungsquelle, insbesondere einer Infrarot-Heizvorrichtung und/oder einer Mikrowellenerzeugungseinrichtung, und/oder einer Elektroheizung ausgebildet ist.

6. Vorrichtung nach einem der vorangehenden Ansprüche, **dadurch gekennzeichnet, dass**
die Sanierungsmasse aus der Aufbewahrungseinrichtung durch eine Druckbeaufschlagung im Inneren der Aufbewahrungseinrichtung und/oder durch eine Pumpeinrichtung über das Transportmittel in den Raum hinter der Schalung einbringbar ist.

7. Vorrichtung nach einem der vorangehenden Ansprüche, **dadurch gekennzeichnet, dass**
die viskose, aushärtbare Sanierungsmasse ein Epoxidharz ist.

8. Verfahren zum Sanieren von schadhaften Leitungswandungen im Bereich des Anschlusses einer Nebenleitung an eine Hauptleitung, umfassend die folgenden Schritte, insbesondere in dieser Reihenfolge:
a. Bereitstellen einer Vorrichtung nach einem der vorangehenden Ansprüche;
b. Teilweises Anordnen des Dehnkörpers in dem Seitenzulauf;
c. Expandieren des Dehnkörpers zum Arretieren des Dehnkörpers und einem mit diesem verbundenen Abdeckelements

9. Verfahren nach Anspruch 8, weiterhin umfassend den folgenden Schritt:
d. Einbringen einer Sanierungsmasse zwischen das Abdeckelement, die Blase und die Wandung.

10. Verfahren nach Anspruch 8 oder 9, weiterhin umfassend den Schritt:
e. ) Expandieren eines weiteren Dehnkörpers zwischen dem Befestigungselement und dem Abdeckelement nach Schritt c) und vor Schritt d) zum Anpressen des Abdeckelements an die Wandung der zu sanierenden Leitung.

11. Verwendung einer Vorrichtung nach einem der Ansprüche 1 bis 7 für eine Sanierung von schadhaften Leitungswandungen im Bereich des Anschlusses einer Nebenleitung an eine Hauptleitung.

## Claims

1. Device (1) for rehabilitating damaged pipe walls in the region of the connection of a branch pipe to a main pipe, comprising a cover element (7) and an expandable bladder (3), wherein the expandable bladder (3), in the non-expanded state, is positioned at least in sections in or through a first recess in the cover element (7) in the branch pipe and, in the expanded state, bears against the wall of the branch pipe, such that the cover element (7) and the bladder (3) together form a formwork, wherein the bladder (3), in the expanded state, bears firmly against the wall of the branch pipe such that the bladder (3) locks itself and the formwork, and in that a fastening element (9) is provided which is arranged at the end of the bladder (3) opposite the branch pipe or adjacent to this end, the fastening element (9) being connected to the bladder (3) and to the cover element (7), **characterised in that** a further bladder (3) is arranged between the fastening element (9) and the cover element (7), expansion of the further bladder (3) pressing the cover element (7) against the wall of the pipe.

2. Device according to claim 1, **characterised in that** the cover element (7) has a second recess through which, by means of a transport means, a viscous, curable rehabilitation mass can be introduced from a storage device into the space between the formwork and the walls of the main pipe and the branch pipe which are adjacent to the formwork.

3. Device according to claim 1 or claim 2, **characterised in that** the bladder (3), the fastening element (9) and the cover element (7) are arranged on a movable carrier element.

4. Device according to one of the preceding claims, **characterised in that** the further bladder (3) is formed in two parts and that in each case a further bladder is arranged at opposite vertical ends of the first bladder.

5. Device according to one of the preceding claims, **characterised in that** a heating device is provided which is in operative connection with the bladder and/or the cover element (7), the heating device being formed in particular as a heating hose, a radiation source, in particular an infrared heating device and/or a microwave generating device, and/or an electric heater.

6. Device according to one of the preceding claims, **characterised in that** the rehabilitation mass can be introduced from the storage device into the space behind the formwork via the transport means by pressurising the interior of the storage device and/or by means of a pump device.

7. Device according to one of the preceding claims, **characterised in that** the viscous, curable rehabilitation mass is an epoxy resin.

8. Method for rehabilitating damaged pipe walls in the region of the connection of a branch pipe to a main pipe, comprising the following steps, in particular in this order:
a) providing a device according to one of the preceding claims;
b) partially arranging the bladder in the side inlet;
c) expanding the bladder in order to lock the bladder and a cover element connected thereto.

9. Method according to claim 8, further comprising the following step:
d) introducing a rehabilitation mass between the cover element, the bladder and the pipe wall.

10. Method according to claim 8 or 9, further comprising the step:
e) expanding a further bladder between the fastening element and the cover element after step c) and before step d) in order to press the cover element against the wall of the pipe to be rehabilitated.

11. Use of a device according to one of claims 1 to 7 for rehabilitating damaged pipe walls in the region of the connection of a branch pipe to a main pipe.

## Revendications

1. Dispositif (1) pour la réhabilitation de parois de conduites endommagées dans la zone du raccordement d'une conduite secondaire à une conduite principale, comprenant un élément de recouvrement (7) et un corps de dilatation expansible (3), le corps de dilatation expansible, à l'état non dilaté, étant positionné au moins par sections dans ou à travers un premier évidement de l'élément de recouvrement (7) dans la conduite secondaire et, à l'état dilaté, venant en appui contre la paroi de la conduite secondaire, de sorte que l'élément de recouvrement (7) et le corps de dilatation (3) forment ensemble un coffrage, le corps de dilatation (3), à l'état dilaté, venant fermement en appui contre la paroi de la conduite secondaire, de sorte que le corps de dilatation (3) s'immobilise lui-même ainsi que le coffrage, et un élément de fixation (9) étant prévu, lequel est disposé à l'extrémité du corps de dilatation (3) opposée à la conduite secondaire ou à proximité de cette extrémité, l'élément de fixation (9) étant relié au corps de dilatation (3) et à l'élément de recouvrement (7), **caractérisé en ce qu'**un autre corps de dilatation est disposé entre l'élément de fixation (9) et l'élément de recouvrement (7), une dilatation de l'autre corps de dilatation (3) pressant l'élément de recouvrement (7) contre la paroi de la conduite.

2. Dispositif selon la revendication 1, **caractérisé en ce que** l'élément de recouvrement (7) présente un second évidement, à travers lequel, au moyen d'un moyen de transport, une masse de réhabilitation visqueuse et durcissable peut être introduite depuis un dispositif de stockage dans l'espace compris entre le coffrage et les parois de la conduite principale et de la conduite secondaire adjacentes au coffrage.

3. Dispositif selon la revendication 1 ou 2, **caractérisé en ce que** le corps de dilatation (3), l'élément de fixation (9) et l'élément de recouvrement (7) sont disposés sur un élément porteur mobile.

4. Dispositif selon l'une quelconque des revendications précédentes, **caractérisé en ce que** l'autre corps de dilatation est réalisé en deux parties et qu'une partie respective de l'autre corps de dilatation est disposée aux extrémités verticales opposées du premier corps de dilatation.

5. Dispositif selon l'une quelconque des revendications précédentes, **caractérisé en ce qu'**un dispositif de chauffage est prévu, qui est en liaison fonctionnelle avec le corps de dilatation et/ou l'élément de recouvrement (7), le dispositif de chauffage étant réalisé en particulier sous la forme d'un tuyau chauffant, d'une source de rayonnement, en particulier d'un dispositif de chauffage infrarouge et/ou d'un dispositif de génération de micro-ondes, et/ou d'un chauffage électrique.

6. Dispositif selon l'une quelconque des revendications précédentes, **caractérisé en ce que** la masse de réhabilitation peut être introduite depuis le dispositif de stockage dans l'espace situé derrière le coffrage, via le moyen de transport, par mise sous pression de l'intérieur du dispositif de stockage et/ou au moyen d'un dispositif de pompage.

7. Dispositif selon l'une quelconque des revendications précédentes, **caractérisé en ce que** la masse de réhabilitation visqueuse et durcissable est une résine époxy.

8. Procédé de réhabilitation de parois de conduites endommagées dans la zone du raccordement d'une conduite secondaire à une conduite principale, comprenant les étapes suivantes, notamment dans cet ordre :
a) mise à disposition d'un dispositif selon l'une quelconque des revendications précédentes ;
b) disposition partielle du corps de dilatation dans l'arrivée latérale ;
c) dilatation du corps de dilatation pour immobiliser le corps de dilatation et un élément de recouvrement relié à celui-ci.

9. Procédé selon la revendication 8, comprenant en outre l'étape suivante :
d) introduction d'une masse de réhabilitation entre l'élément de recouvrement, le corps de dilatation et la paroi.

10. Procédé selon la revendication 8 ou 9, comprenant en outre l'étape suivante :
e) dilatation d'un autre corps de dilatation entre l'élément de fixation et l'élément de recouvrement après l'étape c) et avant l'étape d), pour presser l'élément de recouvrement contre la paroi de la conduite à réhabiliter.

11. Utilisation d'un dispositif selon l'une quelconque des revendications 1 à 7 pour la réhabilitation de parois de conduites endommagées dans la zone du raccordement d'une conduite secondaire à une conduite principale.
